# EUROPEAN PATENT SPECIFICATION

(11) **EP 2 954 199 B1**
(45) Date of publication and mention of the grant of the patent: **07.08.2019**
(21) Application number: 14702626.4
(22) Date of filing: 05.02.2014
(51) Int. Cl.: F03D 1/06, B29C 70/16

(54) **LIMP, ELONGATE ELEMENT WITH GLASS STAPLE FIBRES**
BIEGESCHLAFFES, LÄNGLICHES ELEMENT MIT STAPELFASERN AUS GLAS
ÉLÉMENT SOUPLE, ALLONGÉ AVEC DES FIBRES DE VERRE DISCONTINUES

(30) Priority: 07.02.2013 EP 13154357
(43) Date of publication of application: 16.12.2015
(73) Proprietor: LM WP Patent Holding A/S, 6000 Kolding (DK)
(72) Inventor: DAHL, Martin, CH - 5430 Wettingen (CH); NIELSEN, Lars, DK-8860 Skanderborg (DK)
(74) Representative: COPA Copenhagen Patents
(86) International application number: PCT/EP2014/052213
(87) International publication number: WO 2014/122157

(56) References cited:
- EP-A1- 1 980 658
- EP-A1- 2 230 360
- EP-A1- 2 405 130
- EP-A1- 2 514 584
- WO-A1-91/15619
- WO-A1-02/057067
- AU-A- 1 653 370
- DE-A1- 19 932 842
- GB-A- 2 021 660
- US-A- 3 822 543
- US-A- 5 645 906
- Frederick T Wallenberger ET AL: "Glass Fibers from High and Low Viscosity Melts", MRS Online Proceedings Library, 1 January 2001 (2001-01-01), XP055298119, DOI: 10.1557/PROC-702-U5.3.1 Retrieved from the Internet: URL:http://www.asminternational.org/docume nts/10192/1849770/06781G_p27-34.pdf
- Martin Alberto: "Introduction of Fibre-Reinforced Polymers - Polymers and Composites: Concepts, Properties and Processes" In: "Fiber Reinforced Polymers - The Technology Applied for Concrete Repair", 23 January 2013 (2013-01-23), InTech, XP055267663, ISBN: 978-953-51-0938-9 DOI: 10.5772/54629,

## Description

### Field of the Invention

The present invention relates to a filler rope, the use of such a filler rope, a method of manufacturing such a filler rope, and an apparatus for manufacturing such a filler rope.

### Background of the Invention

Wind turbine blades are often manufactured according to one of two constructional designs, namely a design where a thin aerodynamic shell is glued or otherwise bonded onto a spar beam, or a design where spar caps, also called main laminates, are integrated into the aerodynamic shell.

In the first design, the spar beam constitutes the load bearing structure of the blade. The spar beam as well as the aerodynamic shell or shell parts are manufactured separately. The aerodynamic shell is often manufactured as two shell parts, typically as a pressure side shell part and a suction side shell part. The two shell parts are glued or otherwise connected to the spar beam and are further glued to each other along a leading edge and trailing edge of the shell parts. This design has the advantage that the critical load carrying structure may be manufactured separately and therefore easier to control. Further, this design allows for various different manufacturing methods for producing the beam, such as moulding and filament winding.

In the second design, the spar caps or main laminates are integrated into the shell and are moulded together with the aerodynamic shell. The main laminates typically comprise a high number of fibre layers compared to the remainder of the blade and may form a local thickening of the wind turbine shell, at least with respect to the number of fibre layers. Thus, the main laminate may form a fibre insertion in the blade. In this design, the main laminates constitute the load carrying structure. The blade shells are typically designed with a first main laminate integrated in the pressure side shell part and a second main laminate integrated in the suction side shell part. The first main laminate and the second main laminate are typically connected via one or more shear webs, which for instance may be C-shaped or I-shaped. For very long blades, the blade shells further along at least a part of the longitudinal extent comprise an additional first main laminate in the pressure side shell, and an additional second main laminate in the suction side shell. These additional main laminates may also be connected via one or more shear webs. This design has the advantage that it is easier to control the aerodynamic shape of the blade via the moulding of the blade shell part.

Vacuum infusion or VARTM (vacuum assisted resin transfer moulding) is one method, which is typically employed for manufacturing composite structures, such as wind turbine blades comprising a fibre reinforced matrix material.

During the process of filling the mould, a vacuum, said vacuum in this connection being understood as an under-pressure or negative pressure, is generated via vacuum outlets in the mould cavity, whereby liquid polymer is drawn into the mould cavity via the inlet channels in order to fill said mould cavity. From the inlet channels the polymer disperses in all directions in the mould cavity due to the negative pressure as a flow front moves towards the vacuum channels. Thus, it is important to position the inlet channels and vacuum channels optimally in order to obtain a complete filling of the mould cavity. Ensuring a complete distribution of the polymer in the entire mould cavity is, however, often difficult, and accordingly this often results in so-called dry spots, i.e. areas with fibre material not being sufficiently impregnated with resin. Such dry spots are areas where the fibre material is not impregnated, and where there can be air pockets, which are difficult or impossible to remove by controlling the vacuum pressure and a possible overpressure at the inlet side. In vacuum infusion techniques employing a rigid mould part and a resilient mould part in the form of a vacuum bag, the dry spots can be repaired after the process of filling the mould by puncturing the bag in the respective location and by drawing out air for example by means of a syringe needle. Liquid polymer can optionally be injected in the respective location, and this can for example be done by means of a syringe needle as well. This is a time-consuming and tiresome process. In the case of large mould parts, staff have to stand on the vacuum bag. This is not desirable, especially not when the polymer has not hardened, as it can result in deformations in the inserted fibre material and thus in a local weakening of the structure, which can cause for instance buckling effects.

In most cases the polymer or resin applied is polyester, vinyl ester or epoxy, but may also be PUR or pDCPD, and the fibre reinforcement is most often based on glass fibres or carbon fibres. Epoxies have advantages with respect to various properties, such as shrinkage during curing (in turn potentially leading to less wrinkles in the laminate), electrical properties and mechanical and fatigue strengths. Polyester and vinyl esters have the advantage that they provide better bonding properties to gelcoats. Thereby, a gelcoat may be applied to the outer surface of the shell during the manufacturing of the shell by applying a gelcoat to the mould before fibre-reinforcement material is arranged in the mould. Thus, various post-moulding operations, such as painting the blade, may be avoided. Further, polyesters and vinyl esters are cheaper than epoxies. Consequently, the manufacturing process may be simplified and costs may be lowered.

Often the composite structures comprise a core material covered with a fibre reinforced material, such as one or more fibre reinforced polymer layers. The core material can be used as a spacer between such layers to form a sandwich structure and is typically made of a rigid, lightweight material in order to reduce the weight of the composite structure. In order to ensure an efficient distribution of the liquid resin during the impregnation process, the core material may be provided with a resin distribution network, for instance by providing channels or grooves in the surface of the core material. The sandwich construction is often used in both the aerodynamic shell and the shear webs.

Wind turbine blades have over the years been improved in order to become more efficient and optimised with respect to loads in order to improve the annual energy production (AEP) of the wind turbines and to optimise the cost per MW of the wind turbine. Modern wind turbine blades are often constructed with a root region closest to the hub, an airfoil region comprising a lift-generating profile furthest away from the hub and a transition region between the root region and the airfoil region. The airfoil region has an ideal or almost ideal blade shape with respect to generating lift, whereas the root region has a substantially circular cross-section, which reduces the storm loads and makes it easier and safer to mount the blade to the hub. As it is suggested by the name, the transition region has a shape gradually changing from the circular shape of the root region to the airfoil profile of the airfoil region. Typically, the chord width of the blade in the transition region increases towards the largest chord, also called the shoulder, which may form the boundary between the transition region and the airfoil region. Further, the blade profiles are typically twisted in the longitudinal direction in order to compensate for the local varying inflow velocity and angle of attack of the local radius of the rotor blade. Additionally, as wind turbine blades have become progressively longer in the course of time and today can be more than 70 m long, it has become increasingly attractive to use pre-bent blades for wind turbines, as they allow for placing the wind turbine rotor close to the tower of the wind turbine, while still avoiding that the blade collides with the tower when subjected to a gust. Further, prebending of blades allows the blades to be made less stiff and lighter.

Overall, it is seen that modern wind turbine blades have developed towards a complex geometry due to double-curvatured surface, pre-bending, twisting and so forth. Further, the blades comprise several joints, such as joints at the leading edge and trailing edge of the blade in order to bond the two blade shell parts. The same applies to the C-shaped or I-shaped shear webs. These are often constructed as a sandwich construction with a chamfering at the joints between the leg and the feet (or flanges) in order to transfer loads from the webs to the main laminates without the risk of failure and fractures in the joints between the leg and the feet. However, this chamfering will normally lead to resin rich areas or resin pools at the joint. Such pools of resin will often create burned resin due to high exothermic peeks during the curing process of the resin, which in turn may lead to mechanical week points.

Therefore, ropes comprising unidirectionally oriented reinforcement fibres (UD ropes) are often used as a filler material in the otherwise resin rich areas. Further, such ropes also function in webs so as to transferring loads from skin layers of the leg to the flanges. However, investigation has revealed that the use of UD ropes may lead to dry reinforcement fibres in the centre of the rope due to the densely packed UD fibres. This in turn may also lead to mechanical weak points. The investigation has shown that the dry areas may occur even for relatively small diameter ropes, such as ropes having a diameter of approximately 6 mm. Additionally, a UD rope will only provide stiffness in the longitudinal direction of the blade, whereas it is the transverse strength that is of importance in order to increase the capacity of the joint. With the UD rope the transverse strength of the infused rope is given only by the strength of the resin used.

WO 02/057067 A1 discloses a composite laminate, a layup and a preform comprising a number of fibre tows, wherein a number of fibre tows have been replaced with hairy yarn. The hairy yarn may be constructed from short lengths of broken and twisted carbon fibre or for instance glass fibres. The hairy yarn is arranged such that short lengths of fibres protrude out from the main orientation of the fibres of the hairy yarn.

EP 1 980 658 A1 discloses an apparatus for producing a yarn. The apparatus comprises a cutter for cutting expanded graphite sheets to strips of a given thickness, which are then supplied into a funnel and into a tubular member, where the graphite strips are aligned in a longitudinal direction in the tubular member.

Frederick T Wallenberger et al., "Glass Fibers", ASM, handbook, vol. 21, 2001, page 27-34 discloses an overview of glass fibres types and their manufacture. In one disclosed example, a staple fiberglass yarn is made from continuous yarn. The continuous yarn is chopped into 38 to 50 mm lengths, and then aligned in a mat form and then finally converted to a staple yarn.

It is an object of the invention to obtain a rope comprising reinforcement fibres which overcomes or ameliorates at least one of the disadvantages of the prior art or which provides a useful alternative.

### Summary of the Invention

According to a first aspect the invention provides a rope for reinforcing joints in fibre-reinforced composite structures and being adapted to ensure proper wetting during an infusion process, wherein the rope comprises chopped reinforcement fibres in form of glass fibres, which predominantly have a random orientation, and which have an average length between 0.5 cm and 5 cm, and retaining means for retaining the chopped fibres in a rope-shape.

The chopped glass fibres will predominantly have a random orientation, whereby the fibres are not as densely packed. Therefore, the ropes with chopped fibres will facilitate openings from the circumference of the rope to the core of the rope and ensure proper wetting through the entire rope, when used in an infusion process for manufacturing a wind turbine blade or another composite structure. Further, the randomly oriented chopped fibres ensure that at least a number of the fibres are oriented with a component in the transverse direction. Accordingly, the fibres contribute to the transverse strength and increase the capacity of the joint in which the rope is used as filler material. Thus, there is no need to buy additional UD ropes and costs for disposing the excess or scrap glass may be avoided, since the excess glass or scrap glass may be chopped and used for ropes according to the invention. The ropes normally account for a relatively significant part of the cost of the blade due to the amount of rope needed. A 70 metre blade comprising two I-webs will for instance necessitate the use of eight ropes for the webs alone. Since the webs normally extend substantially along the entire length of the blade, a single blade will need 560 metres of rope for the webs alone. Therefore, the ropes with chopped fibres not only provide a mechanical advantage over the use of UD ropes but also in relation to less waste and lower production costs.

From the previous description it follows that the chopped fibres in a highly advantageous embodiment have a random orientation in the rope.

According to a particular advantageous embodiment, the retaining means is an open-structured tube, such as a mesh tube, and wherein the chopped fibres are retained in the tube. This provides for a simple sock-like structure for holding the chopped fibres, where the chopped fibres may protrude from the openings in the tube so as to provide the transverse strength of the joint. The mesh tube may have a shape and design similar to those used in stents.

The mesh tubes also have the advantage that they may be expandable or retractable. Thereby, the same type of mesh tube can be used for various diameter ropes comprising chopped fibres. The mesh tube may be pulled to the desired diameter, e.g. simultaneously with the chopped reinforcement fibres being fed into the tube. The tube may also be heat treated to retain the shape and bond to the chopped fibres. In principle it is also possible to vary the diameter of the rope in the longitudinal direction by varying the feeding speed and/or pulling speed.

According to another highly advantageous embodiment, the retaining means is one or more wrapping fibres that are wrapped around the chopped reinforcement fibres. The wrapping fibres can for instance be wrapped around the chopped fibres via a braiding machine. The braiding machine may also be used to form a mesh tube surrounding the chopped fibres. The mesh tube can also be formed by wrapping a mesh sheet around the chopped fibre. This can for instance be carried out with a device similar to a braiding machine.

In another embodiment, the retaining means is a tackifier. The tackifier may be used to ensure that the chopped fibres are retained in the rope shape. This can for instance be carried out by feeding the chopped fibres into a shaping tube or nozzle and passing the chopped fibres through a resin or tackifier bath. In a simpler embodiment, the tackifier is simply added to the chopped fibre, after which the chopped fibres are compacted and shaped into the rope. The tackifier ensures that the chopped fibres adhere to each other. The tackifier may for instance be a thermoplastic. The tackifier advantageously fills 0.5-10%, or 0.5-5%, e.g. around 1%, of the finished rope by volume.

In yet another embodiment, the retaining means is a core fibre or filament to which the chopped reinforcement fibres are attached. Such an embodiment provides for a fluffy reinforcement rope that ensures proper wetting and transverse reinforcement. The chopped reinforcement fibres may for instance be wrapped around the core fibre or filament, or be stitched or woven with the core fibre or filament. The rope may also comprise additional core fibres or filaments.

In an advantageous embodiment, the average length of the chopped fibres is between 1 cm and 4 cm, advantageously around 2.5 cm. Such lengths provides for an optimum random orientation of the fibres in order to ensure proper wetting and transverse reinforcement.

In another advantageous embodiment, the rope has a diameter of at least 5 mm. The rope diameter may be up to 20mm, or 25 mm, or even up to 30 mm. Advantageous rope diameters are for instance approximately 6 mm, 9 mm, 12 mm or 15 mm.

The retaining means may also be shaped with an exterior shape adapted to a particular joint. The retaining means may for instance have a substantially triangular cross-section having three sides with a mesh structure, thereby providing a triangular shaped rope.

The chopped reinforcement fibres advantageously fill at least 50%, or at least 60%, or at least 70%, or at least 80%, or at least 90% of the rope by volume.

In an advantageous embodiment, the retaining means are made from a polymer material, such as a thermoplastic material or thermosetting material. However, the material may also be chosen from the group of nylon, glass, and polyester. In another advantageous embodiment, the material is dissolvable in a resin, such as polyester, vinyl ester or epoxy, whereby the retaining means will dissolve into the polymer matrix when the resin is infused and later cured in order to form the composite structure. Thus, the wrapping fibres or mesh tube are made of said material.

In another advantageous embodiment, the predominantly randomly oriented chopped reinforcement fibres may be entangled so as to maintain the rope shape. This entanglement is obtained through the randomly oriented chopped fibres and not through twisting or the like. In this embodiment, the retaining means may be considered formed by the entangled chopped fibres.

According to a second aspect, the invention provides a use of a rope according to any of the preceding embodiments as a filling material in a composite structure. Similarly, the invention provides a use of a rope according to any of the previous embodiments as a filling material to prevent the formation of resin pools in a resin transfer moulding process for manufacturing a composite structure, which in turn minimises resin rich areas in the composite structure which may lead to mechanical weak points in the structure.

According to a third aspect, the invention provides a composite structure made of a fibre-reinforcement material embedded in a polymer matrix and comprising a rope according to any of the preceding embodiments, the rope being embedded in the polymer matrix.

The composite structure advantageously comprises a joint, wherein the rope is arranged at or in the joint.

In an alternative embodiment, the rope is shaped during manufacture of the composite structure by injecting chopped fibres into a void, e.g. a void at the joint, in effect filling the void with chopped fibres and forming a rope-shape, after which the resin is injected. In a preferred embodiment, the composite structure is a wind turbine blade. Accordingly, the invention provides a wind turbine blade made of a fibre-reinforced material embedded in a polymer matrix, where the wind turbine blade may comprise joints between different parts of the wind turbine blade. The ropes may for instance be used in the shear webs mounted internally in the wind turbine blade. The ropes may also be used for add-ons to the blades, such as surface mounted spoilers, flaps or the like.

The polymer matrix may for instance be epoxy, polyester or vinyl ester. The fibre reinforcement material is glass fibres.

According to a fourth aspect, the invention provides a method of manufacturing a rope comprising chopped reinforcement fibres, the method comprising the steps of: a) providing chopped reinforcement fibres in form of glass fibres, which predominantly have a random orientation, and which have an average length between 0.5 cm and 5 cm, b) providing retaining means for retaining the chopped reinforcement fibres, and c) shaping the chopped reinforcement fibres and retaining means to a rope.

In an advantageous embodiment, step a) comprises chopping or otherwise cutting a fibre reinforcement material into chopped reinforcement fibres.

In another advantageous embodiment, steps b) and/or c) comprise the step of feeding the chopped reinforcement material into a mesh tube. The chopped fibres may for instance be fed to the tube by blowing the chopped fibres or otherwise stuffing them into the tube. The mesh tube is pulled as the chopped fibres are fed into the mesh tube so as to obtain a desired diameter for the rope. The speed of pulling and filling can be set so as to obtain the desired rope diameter and fibre density.

In another advantageous embodiment, the chopped reinforcement fibres are fed to a braiding machine that braids the retaining means around the chopped fibres. The braiding machine may for instance form a mesh tube around the chopped fibres. Alternatively, it may provide single wrapping fibres around the chopped fibres.

In yet another embodiment, a tackifier is supplied to the chopped fibres in step b).

According to a fifth embodiment, the invention provides an apparatus for manufacturing a rope comprising chopped reinforcement fibres, wherein the apparatus comprises: a chopping device for chopping reinforcement fibres in form of glass fibres into chopped reinforcement fibres, which have an average length between 0.5 cm and 5 cm, a rope forming device for providing retaining means for retaining the chopped reinforcement fibres and shaping the chopped reinforcement fibres in a rope-shape, and a filling device for feeding the chopped reinforcement fibres to the rope forming device, wherein the filling device is adapted to receive said chopped reinforcement fibres from the chopping device, and the filling device further being connected to the rope forming machine so as to feed said chopped reinforcement fibres to said rope forming machine. In principle, not part of the claimed apparatus, the chopping device may be omitted from the apparatus, if chopped fibres can be purchased or otherwise produced separately. In this case, the chopped fibres are simply fed to the filling device, and wherein the apparatus further comprises means for randomly orienting the chopped reinforcement fibres.

The means for randomly orienting the chopped reinforcement fibres may be integrated into the chopping device and/or the filling device. However, the means may also be applied as a separate device on the apparatus.

In one advantageous embodiment, the rope forming device comprises a braiding device for braiding one or more wrap wires around the chopped reinforcement fibres. The braiding machine may for instance form a mesh tube surrounding the chopped fibres.

In another advantageous embodiment, the rope forming device comprises a device for fitting a mesh tube around the chopped reinforcement fibres. Accordingly, the chopped fibres may be filled into pre-manufactured mesh tubes.

The rope forming device may further comprise a pulling device for pulling the mesh tube to a desired outer diameter.

In one embodiment, the filling device comprises a spraying device for spraying or blowing the chopped reinforcement fibres to the rope shaping device. However, according to an advantageous embodiment, the feeding device comprises a compactor, such as a screw compactor, for compressing the chopped fibres. In such an embodiment, the chopped fibres may simply be pushed to the rope shaping device. The filling device may include a shaping device, such as a piece of tube or a nozzle, which supplies the chopped fibres to the rope shaping device in the desired cross-sectional shape desired for the rope.

In a particular advantageous embodiment, the filling device further comprises a variable oriented, e.g. rotatable, nozzle or mouthpiece for further randomising the orientation of chopped reinforcement fibres fed to the rope shaping device.

In yet another embodiment, the apparatus further comprises a winding machine for winding the rope on a coil, roll or spool. Thus, the ropes can afterwards be applied to the fibre layup from said roll when manufacturing the composite structure.

### Detailed Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 shows a first embodiment of a filler rope according to the invention,
Fig. 5 shows a second embodiment of a filler rope according to the invention,
Fig. 6 shows a general layout of an apparatus for making filler ropes according to the invention,
Fig. 7 shows a schematic view of a first embodiment of an apparatus for making filler ropes according to the invention,
Fig. 8 shows a schematic view of a second embodiment of an apparatus for making filler ropes according to the invention,
Fig. 9 shows a cross-section of a variation of the second embodiment of the filler rope, and
Fig. 10 shows a cross-section of a third embodiment of the filler rope according to the invention.

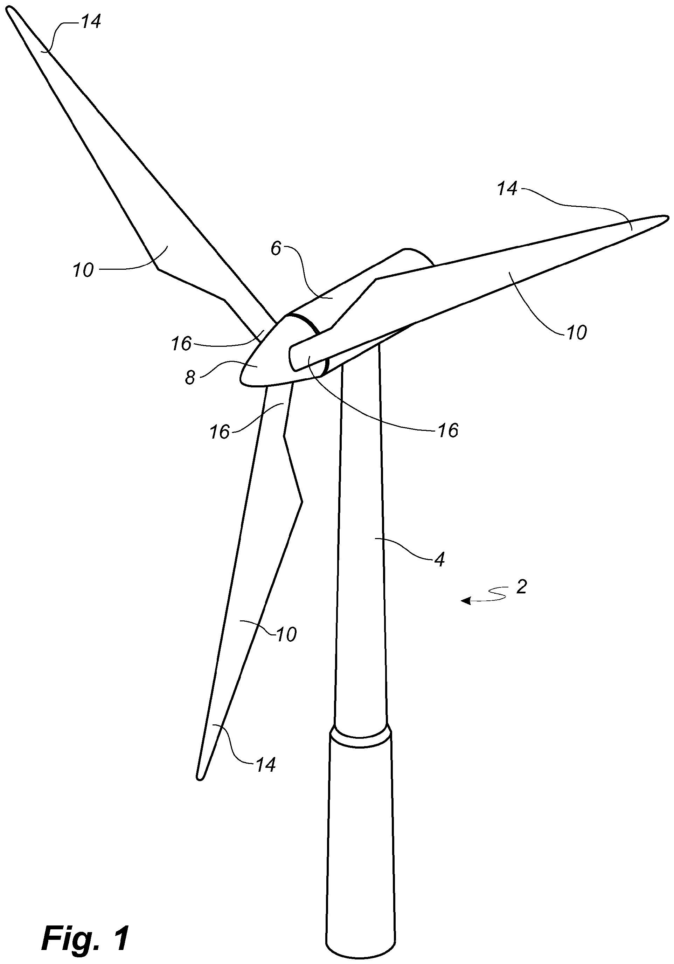

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

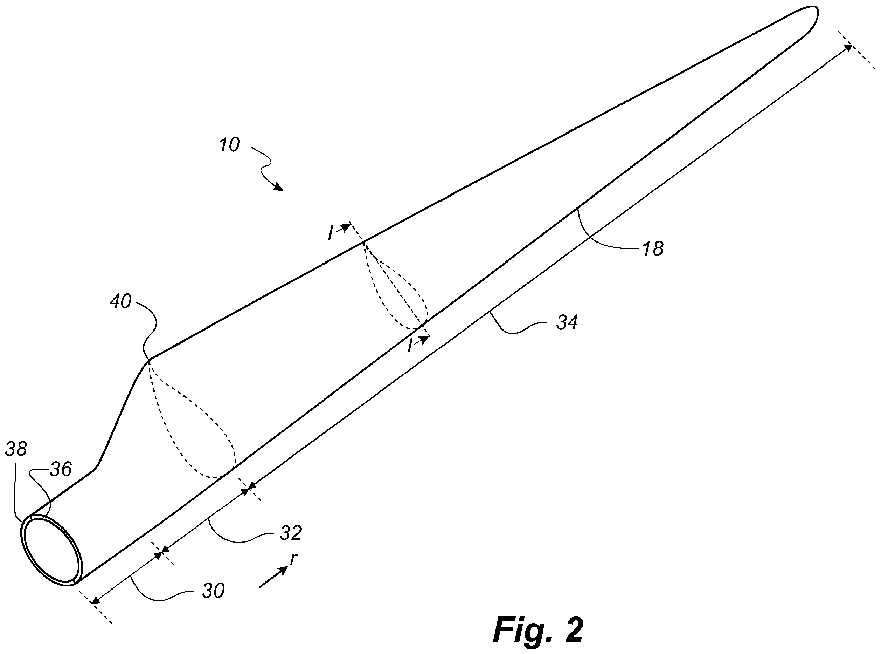

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

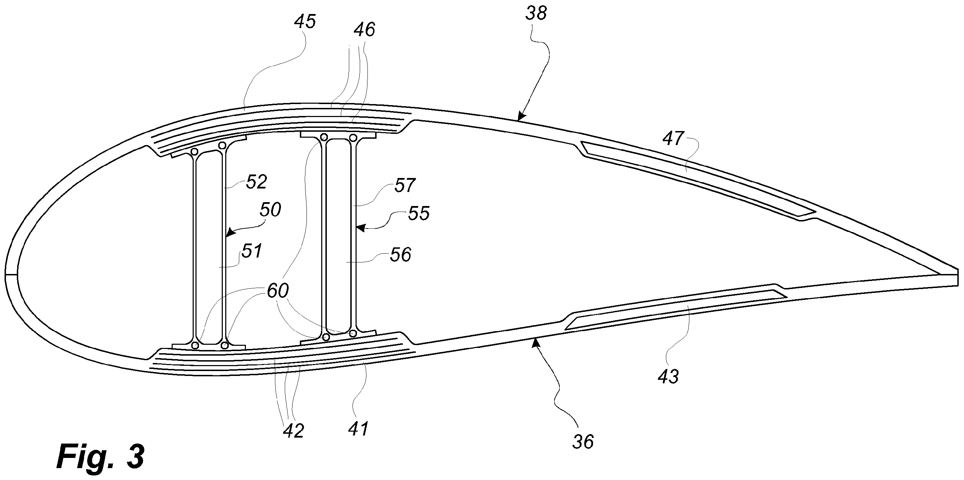

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 38 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as I-shaped webs. However, other configurations, such as C-shaped webs may also be utilised. The first shear web 50 comprises a leg and two feet or flanges. The leg comprises a sandwich core material 51, such as balsawood or foamed polymer, covered by a number of skin layers 52. The second shear web 55 has a similar design with a leg and two flanges, the leg comprising a sandwich core material 56 covered by a number of skin layers 57. The sandwich core material 51, 56 of the two shear webs 50, 55 are chamfered near the flanges in order to transfer loads from the webs 50, 55 to the main laminates 41, 45 without the risk of failure and fractures in the joints between the leg and the feet. However, such a design will normally lead to resin rich areas in the joint areas between the legs and the flanges. Further, such resin rich area may comprise burned resin due to high exothermic peeks during the curing process of the resin, which in turn may lead to mechanical week points. Therefore, a number of filler ropes 60 comprising glass fibres are arranged at these joint areas. Further, such ropes 60 will also facilitate transferring loads from the skin layers of the leg to the flanges.

In an alternative embodiment, the ropes 60 are formed by injecting dry or tacky chopped fibres into voids at the joint during manufacture of the webs. This is particular suitable if the flanges are pre-manufactured. In such a case, dry chopped fibres may be injected in between the glass skins, after which resin is injected and filling the void and chopped fibres.

The blade shells 36, 38 may comprise further fibre-reinforcement at the leading edge and the trailing edge. Typically, the shell parts 36, 38 are bonded to each other via glue flanges in which additional filler ropes may be used (not shown). Additionally, very long blades may comprise sectional parts with additional spar caps, which are connected via one or more additional shear webs, which may necessitate even more use of filler ropes. Further, the filler ropes may also be used in add-ons or retrofitted parts on the blades, such as surface mounted spoilers, e.g. T- or L-shaped, flaps or the like.

Prior art wind turbine blades utilise filler ropes comprising unidirectional glass fibres or twisted glass fibres. However, the glass fibres are densely packed in such ropes, and investigations have revealed that the use of the ropes may lead to dry reinforcement fibres in the centre of the rope. This in turn may also lead to mechanical weak points. The investigation has shown that the dry areas may occur even for relatively small diameter ropes, such as ropes having a diameter of approximately 6 mm. Additionally, such ropes only provide stiffness in the longitudinal direction of the blade, whereas it is the transverse strength that is of importance in order to increase the capacity of the joint. With the prior art ropes the transverse strength of the infused rope is given only by the strength of the resin used.

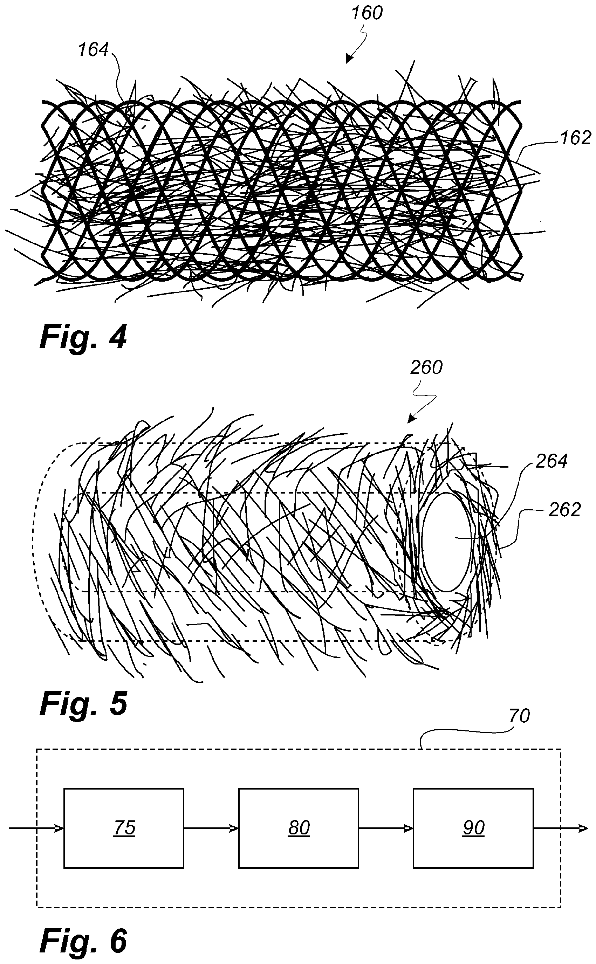

The present invention overcomes these problems by providing a rope comprising chopped reinforcement fibres. A first embodiment of a rope 160 according to the invention is depicted in Fig. 4. The filler rope 60 comprises chopped reinforcement fibres 162 contained in retaining means in form of a mesh tube 164. The chopped reinforcement fibres 162 have a random orientation, whereby the fibres are not as densely packed. Therefore, the ropes 162 with chopped fibres facilitate openings from the circumference of the rope to the core of the rope and ensure proper wetting through the entire rope, when used in an infusion process for manufacturing the wind turbine blade 10 or another composite structure. Further, the randomly oriented chopped fibres 162 will ensure that at least a number of the fibres 162 are oriented with a component in the transverse direction. Accordingly, the chopped fibres 162 contribute to the transverse strength and increase the capacity of the joint in which the filler rope 160 is used as filler material.

The chopped reinforcement fibres 162 are made of the glass fibres. The chopped reinforcement fibres advantageously have an average length of 25 mm, which has proven to provide a sufficient random orientation of the chopped reinforcement fibres 162 to ensure proper wetting and providing transverse strength to a joint in which the rope 160 is used as filler material.

The mesh tube 164 surrounding the chopped fibres 162 is advantageously made of a polymer material. The polymer material may be dissolvable in resin to that the mesh in the infusion process dissolves and becomes part of the matrix material of the final composite structure. The mask size of the mesh tube 164 may be of any desired size, but should in general be large enough for resin to penetrate and for the chopped fibres to protrude through, and small enough to ensure that the chopped fibres 162 are retained within the mesh tube 164.

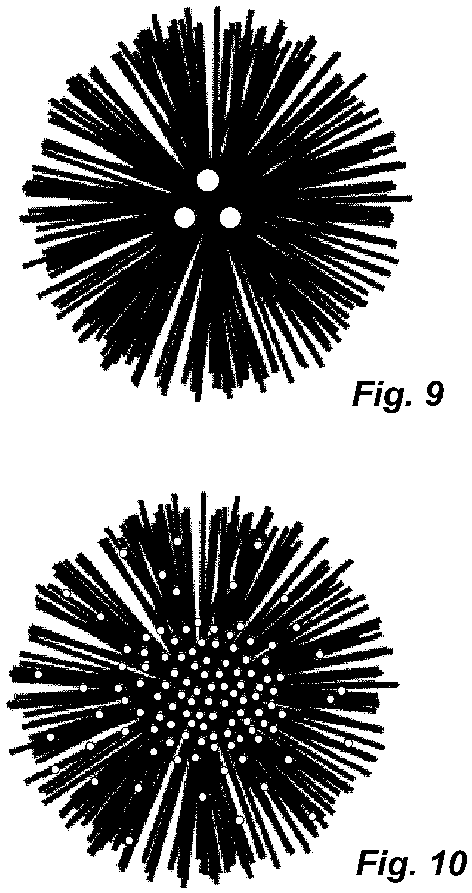

Fig. 5 shows a second embodiment of a filler rope 260 according to the invention. In this embodiment chopped reinforcement fibres 262 are attached to or wrapped around a retaining means in form of a core fibre or filament 264. In addition, a tackifying material may be applied to the chopped reinforcement fibres 262 to ensure that they are retained on the core filament 264. The filler rope may also comprise further flexible core elements as shown in Fig. 9. The core filaments may be stitched, twisted or woven so that the resin is able to enter the core for a full wet out during infusion. The chopped reinforcement fibres may be stitched, wrapped or woven together with the core filaments, so as to provide a "fluffy" rope as shown in Fig. 9.

In yet another embodiment, not shown in the figures, the filler rope comprises a retaining means in form of a tackifier only. The tackifier ensures that the chopped fibres are retained in the desired rope shape. It is also possible to use a combination of a tackifier and a mesh tube as retaining means.

There are various ways to manufacture a filler rope according to the invention. An apparatus 70 for manufacturing such a filler rope generally comprises a chopping device 75, a filling device 80, and a rope shaping device 90 as shown very schematically in Fig. 6. The chopping device 75 (or chopper) cuts or chops reinforcement fibres into chopped reinforcement fibres of a predetermined length or length interval. The filling device 80 is adapted to receive the chopped fibres from the chopper 75 and feeding the chopped fibres to the rope forming device 90. The rope forming device 90 shapes the rope and provides retaining means to the chopped fibres so as to ensure that the chopped fibres stay in the desired rope shape. In principle, not part of the claimed apparatus, the chopping device may be omitted from the apparatus, if chopped fibres can be purchased or otherwise produced separately. In this case, the chopped fibres are simply fed to the filling device.

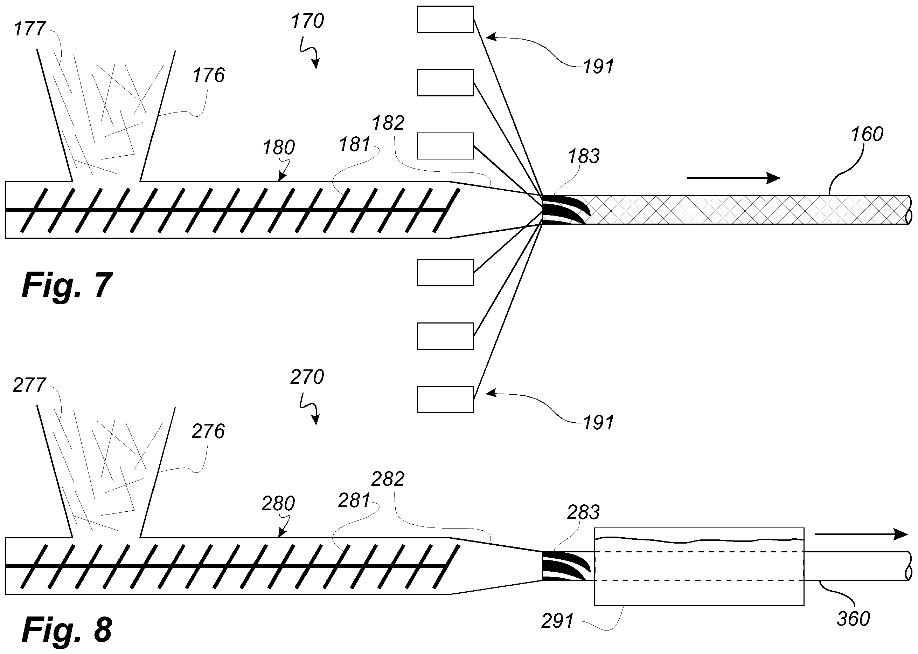

Fig. 7 shows an embodiment of an apparatus 170 according to the invention for manufacturing filler ropes 160 according to the first embodiment shown in Fig. 4. The apparatus 170 comprises a chopping device, which comprises an inlet in form of a funnel 176 in which blades, knifes, a grinder or the like (not shown) are arranged. Long reinforcement fibres 177, e.g. from fibre mats or unidirectional fibre ropes, are fed into the funnel 176, and the long fibres 177 are chopped into fibres of a predetermined length interval, e.g. around 25 mm. It is also possible to use excess glass from the layup procedure for manufacturing the wind turbine blade. It is also possible to use scrapped glass from an erroneous manufacture of a composite structure, in particular if the cured resin can be removed from the scrapped glass.

The chopped fibres are fed into a filling device 180. The filling device 180 may for instance comprise a compactor device 181, e.g. in form of a screw compactor. The chopped fibres are pushed forward in a tubular structure by the screw compactor 181. The tubular structure may comprise a tapered part 182 to further compact the chopped fibres and compress the chopped fibres to the desired rope diameter. In general, the chopped fibres have a random orientation from the chopping and compression of the chopped fibres. However, the filling device 180 may additionally comprise a mouthpiece or a nozzle 183 for facilitating further randomness to the orientation of the chopped fibres. The mouthpiece 183 may for instance be rotating in order to ensure that the chopped fibres obtain different orientations.

The rope shaping device comprises a braiding machine 191 that braids polymer fibres or threads into a mesh tube surrounding the chopped fibres, thus forming the filler rope 160. The apparatus may further comprise a pulling device to continuously pull the rope, and may additionally comprise a winding machine for winding the rope onto a roll.

Fig. 8 shows a second embodiment of an apparatus 270 for manufacturing a filler rope according to the present invention, wherein like reference numerals refer to like parts of the embodiment shown in Fig. 7. Therefore, only the differences between the two embodiments will be described. In this embodiment, the rope shaping device of the apparatus 270 comprises a tackifier bath or resin bath. The chopped fibres are pushed through the bath, e.g. in an open structured tube. The tackifier ensures that the chopped fibres are retained in the rope shape 360.

However, a filler rope utilising a tackifier as retaining means may also be manufactured in a much simpler way. The tackifier may simply be applied to the chopped fibres before they are compacted into the rope shape. The tackifier will make the chopped fibres adhere to each other and still be able to flex and compact in order to form the rope with randomly oriented chopped fibres. The tackifier may for instance be a thermoplastic resin. It is sufficient to provide 1% by volume of the finished rope so that the tackifier is dispersed through the rope as shown in Fig. 10 with white dots. According to an advantageous embodiment, the tackifier may fill 0.5-10% or 0.5-5% by volume of the finished rope. According to another embodiment, not shown, the randomly oriented chopped reinforcement fibres are entangled or entwined so that they maintain the rope shape. This entanglement is obtained through the randomly oriented chopped fibres and not through twisting or the like.

The invention has been described with reference to advantageous embodiments. However, the scope of the invention is not limited to the described embodiment and alterations and modifications may be carried out without deviating from the scope of the invention. The invention has for instance been described in relation to a wind turbine blade comprising a load carrying structure integrated in the blade shell. However, the filler ropes according to the invention may also be applied to wind turbine blades comprising a central beam or spar as the load carrying structure with an aerodynamic shell bonded to the beam. The filled ropes may also be applied in other composite structures, where filler ropes are relevant.

**List of reference numerals**

| | |
|---|---|
| 2 | wind turbine |
| 4 | tower |
| 6 | nacelle |
| 8 | hub |
| 10 | blade |
| 14 | blade tip |
| 16 | blade root |
| 18 | leading edge |
| 20 | trailing edge |
| 22 | pitch axis |
| 30 | root region |
| 32 | transition region |
| 34 | airfoil region |
| 36 | pressure side shell |
| 38 | suction side shell |
| 40 | shoulder |
| 41 | main laminate / spar cap of pressure side |
| 42 | fibre layers |
| 43 | sandwich core material |
| 45 | main laminate / spar cap of suction side |
| 46 | fibre layers |
| 47 | sandwich core material |
| 50 | first shear web |
| 51 | sandwich core material of first shear web |
| 52 | skin layer(s) |
| 55 | second shear web |
| 56 | sandwich core material of second shear web |
| 57 | skin layer(s) |
| 60, 160, 260, 360 | filler rope(s) |
| 162, 262 | chopped reinforcement fibres |
| 164, 264 | retaining means |
| 70 | apparatus for manufacturing ropes |
| 75 | chopping device |
| 80, 180, 280 | filling device |
| 90 | rope forming device |
| 176, 276 | feeding chute |
| 177, 277 | long fibres |
| 181, 281 | compactor device / screw compactor |
| 182, 282 | tapered part |
| 183, 283 | mouthpiece / nozzle |
| 191 | braiding machine |
| 291 | tackifier bath |

## Claims

1. A rope (60, 160, 260, 360) for reinforcing joints in fibre-reinforced composite structures, wherein the rope (60, 160, 260, 360) comprises:
- chopped reinforcement fibres (162, 262) in form of glass fibres, and
- retaining means (164,264) for retaining the chopped fibres (162, 262) in a rope-shape, wherein the glass fibres have an average length between 0.5 cm and 5 cm **characterised in that** the glass fibres predominantly have a random orientation.

2. A rope (60, 160, 260, 360) according to claim 1, wherein said predominantly randomly oriented chopped reinforcement fibres (162, 262) are entangled.

3. A rope (60, 160, 260, 360) according to claim 1 or 2, wherein the retaining means (164,264) is an open-structured tube, such as a mesh tube, and wherein the chopped fibres (162, 262) are retained in the tube.

4. A rope (60, 160, 260, 360) according to any of the preceding claims, wherein the retaining means (164,264) is a tackifier.

5. A rope (60, 160, 260, 360) according to any of the preceding claims, wherein the average length of the chopped fibres is between 1 cm and 4 cm, advantageously around 2.5 cm.

6. A rope (60, 160, 260, 360) according to any of the preceding claims, wherein the rope (60, 160, 260, 360) has a diameter of at least 5 mm.

7. A use of a rope (60, 160, 260, 360) according to any of claims 1-6 as a filling material in a composite structure or to prevent the formation of resin pools in a resin transfer moulding process for manufacturing a composite structure.

8. A composite structure, such as a wind turbine blade, made of a fibre-reinforcement material embedded in a polymer matrix and comprising a rope (60, 160, 260, 360) according to claim 1-6, the rope (60, 160, 260, 360) being embedded in the polymer matrix, e.g. with the rope (60, 160, 260, 360) being arranged at or in a joint of the composite structure.

9. A method of manufacturing a rope (60, 160, 260, 360) comprising chopped reinforcement fibres (162, 262), the method comprising the steps of:
a) providing chopped reinforcement fibres (162, 262), in form of glass fibres, which predominantly have a random orientation, and which have an average length between 0.5 cm and 5 cm,
b) providing retaining means for retaining the chopped reinforcement fibres (162, 262), and
c) shaping the chopped reinforcement fibres (162, 262) and retaining means to a rope (60, 160, 260, 360) with the glass fibres predominantly having a random orientation, **characterised in that**
wherein step a) comprises chopping a fibre reinforcement material into chopped reinforcement fibres (162, 262).

10. A method according to claim 9, wherein steps b) and/or c) comprises the step of feeding the chopped reinforcement material (162, 262) into a mesh tube.

11. A system comprising glass fibre reinforcement material and an apparatus (70) for manufacturing a rope (60, 160, 260, 360) comprising chopped reinforcement fibres (162, 262), wherein the apparatus comprises:
- a chopping device (75) for chopping the glass fibre reinforcement material into chopped reinforcement fibres (162, 262), which have an average length between 0.5 cm and 5 cm,
- a rope forming device (90) for providing retaining means for retaining the chopped reinforcement fibres (162, 262) and shaping the chopped reinforcement fibres (162, 262) to a rope-shape, and
- a filling device (80, 180, 280) for feeding the chopped reinforcement fibres (162, 262) to the rope forming device (90), wherein the filling device (80, 180, 280) is adapted to receive said chopped reinforcement fibres (162, 262) from the chopping device (75), and the filling device (80, 180, 280) further being connected to the rope forming machine so as to feed said chopped reinforcement fibres (162, 262) to said rope forming machine, and wherein the apparatus further comprises means for randomly orienting the chopped reinforcement fibres.

12. A system according to claim 11, wherein the rope forming device comprises a braiding device for braiding one or more wrap wires around the chopped reinforcement fibres.

13. A system according to any of claims 11-12, wherein the feeding device comprises a screw compactor for compacting the chopped reinforcement fibres.

14. A system according to any of claims 11-13, wherein the filling device further comprises a variable oriented, e.g. rotatable, nozzle for randomising the orientation of chopped reinforcement fibres fed to the rope shaping device.

## Patentansprüche

1. Seil (60, 160, 260, 360) zum Verstärken von Verbindungsstellen in faserverstärkten Verbundkonstruktionen, wobei das Seil (60, 160, 260, 360) Folgendes umfasst:
- gehackte Verstärkungsfasern (162, 262) in Form von Glasfasern, und
- ein Haltemittel (164, 264) zum Halten der gehackten Fasern (162, 262) in einer Seilform, wobei die Glasfasern eine durchschnittliche Länge zwischen 0,5 cm und 5 cm aufweisen, **dadurch gekennzeichnet, dass** die Glasfasern vorwiegend eine zufällige Orientierung aufweisen.

2. Seil (60, 160, 260, 360) nach Anspruch 1, wobei die vorwiegend zufällig orientierten gehakten Verstärkungsfasern (162, 262) verwickelt sind.

3. Seil (60, 160, 260, 360) nach Anspruch 1 oder 2, wobei es sich bei dem Haltemittel (164, 264) um eine offenwandige Röhre, wie etwa eine Gitterröhre handelt, und wobei die gehackten Fasern (162, 262) in der Röhre gehalten werden.

4. Seil (60, 160, 260, 360) nach einem der vorangehenden Ansprüche, wobei es sich bei dem Haltemittel (164, 264) um einen Klebrigmacher handelt.

5. Seil (60, 160, 260, 360) nach einem der vorangehenden Ansprüche, wobei die durchschnittliche Länge de gehackten Fasern zwischen 1 cm und 4 cm beträgt, vorteilhafterweise etwa 2,5 cm.

6. Seil (60, 160, 260, 360) nach einem der vorangehenden Ansprüche, wobei das Seil (60, 160, 260, 360) einen Durchmesser von mindestens 5 mm aufweist.

7. Verwendung eines Seils (60, 160, 260, 360) nach einem der Ansprüche 1-6 als Füllmaterial in einer Verbundkonstruktion oder zum Verhindern der Bildung von Harzlachen in einem Harzinjektions-Formprozesses zum Herstellen einer Verbundkonstruktion.

8. Verbundkonstruktion, wie etwa ein Windkraftanlagenflügel, der aus einem in einer Polymermatrix eingebetteten Faserverstärkungsmaterial gebildet ist und ein Seil (60, 160, 260, 360) nach Anspruch 1-6 umfasst, wobei das Seil (60, 160, 260, 360) in der Polymermatrix eingebettet ist, wobei z. B. das Seil (60, 160, 260, 360) an oder in einer Verbindungsstelle der Verbundkonstruktion angeordnet ist.

9. Verfahren zum Herstellen eines gehackte Verstärkungsfasern (162, 262) umfassenden Seils (60, 160, 260, 360), wobei das Verfahren folgende Schritte umfasst:
a) Bereitstellen gehackter Verstärkungsfasern (162, 262) in Form von Glasfasern, die vorwiegend eine zufällige Orientierung aufweisen und die eine durchschnittliche Länge zwischen 0,5 cm und 5 cm aufweisen,
b) Bereitstellen eines Haltemittels zum Halten der gehackten Verstärkungsfasern (162, 262), und
c) Bilden der gehackten Verstärkungsfasern (162, 262) und des Haltemittels zu einem Seil (60, 160, 260, 360), wobei die Glasfasern vorwiegend eine zufällige Orientierung aufweisen, **dadurch gekennzeichnet, dass**
wobei Schritt a) das Hacken eines Faserverstärkungsmaterials in gehackte Verstärkungsfasern (162, 262) umfasst.

10. Verfahren nach Anspruch 9, wobei Schritte b) und/oder c) den Schritt des Zuführens des gehackten Verstärkungsmaterials (162, 262) in eine Gitterröhre umfassen.

11. System, das Glasfaser-Verstärkungsmaterial und eine Vorrichtung (70) zum Herstellen eines gehackte Verstärkungsfasern (162, 262) umfassenden Seils (60, 160, 260, 360) umfasst, wobei die Vorrichtung Folgendes umfasst:
eine Hackeinrichtung (75) zum Hacken des Glasfaser-Verstärkungsmaterials in gehackte Verstärkungsfasern (162, 262), die eine durchschnittliche Länge zwischen 0,5 cm und 5 cm aufweisen,
eine Seilbildungseinrichtung (90) zum Bereitstellen eines Haltemittels zum Halten der gehackten Verstärkungsfasern (162, 262) und Formen der gehackten Verstärkungsfasern (162, 262) zu einer Seilform, und
eine Fülleinrichtung (80, 180, 280) zum Zuführen der gehackten Verstärkungsfasern (162, 262) zu der Seilbildungseinrichtung (90), wobei die Fülleinrichtung (80, 180, 280) dazu angepasst ist, die gehackten Verstärkungsfasern (162, 262) von der Hackeinrichtung (75) aufzunehmen, und die Fülleinrichtung (80, 180, 280) weiter mit der Seilbildungsmaschine verbunden ist, um die gehackten Verstärkungsfasern (162, 262) zu der Seilbildungsmaschine zuzuführen, und wobei die Vorrichtung weiter ein Mittel zum zufälligen Orientieren der gehackten Verstärkungsfasern umfasst.

12. System nach Anspruch 11, wobei die Seilbildungseinrichtung eine Flechteinrichtung zum Flechten von einem oder mehreren Hülldrähten um die gehackten Verstärkungsfasern umfasst.

13. System nach einem der Ansprüche 11-12, wobei die Zufuhreinrichtung einen Schneckenverdichter zum Verdichten der gehackten Verstärkungsfasern umfasst.

14. System nach einem der Ansprüche 11-13, wobei die Fülleinrichtung weiter eine variabel orientierte, z. B. drehbare, Düse umfasst, um die Orientierung der zu der Seilformeinrichtung zugeführten gehackten Verstärkungsfasern zufällig einzustellen.

## Revendications

1. Corde (60, 160, 260, 360) servant à renforcer des joints dans des structures composites renforcées de fibres, dans laquelle la corde (60, 160, 260, 360) comporte :
- des fibres de renfort coupées (162, 262) sous la forme de fibres de verre, et
- un moyen de retenue (164, 264) servant à retenir les fibres coupées (162, 262) en une forme de corde, dans laquelle les fibres de verre ont une longueur moyenne entre 0,5 cm et 5 cm, **caractérisée en ce que** les fibres de verre ont essentiellement une orientation aléatoire.

2. Corde (60, 160, 260, 360) selon la revendication 1, dans laquelle lesdites fibres de renfort coupées orientées de manière essentiellement aléatoire (162, 262) sont enchevêtrées.

3. Corde (60, 160, 260, 360) selon la revendication 1 ou la revendication 2, dans laquelle le moyen de retenue (164, 264) est un tube à structure ouverte, tel un tube à mailles, et dans laquelle les fibres coupées (162, 262) sont retenues dans le tube.

4. Corde (60, 160, 260, 360) selon l'une quelconque des revendications précédentes, dans laquelle le moyen de retenue (164, 264) est un agent poisseux.

5. Corde (60, 160, 260, 360) selon l'une quelconque des revendications précédentes, dans laquelle la longueur moyenne des fibres coupées est entre 1 cm et 4 cm, de manière avantageuse environ 2,5 cm.

6. Corde (60, 160, 260, 360) selon l'une quelconque des revendications précédentes, dans laquelle la corde (60, 160, 260, 360) a un diamètre d'au moins 5 mm.

7. Utilisation d'une corde (60, 160, 260, 360) selon l'une quelconque des revendications 1 à 6 comme matière de remplissage dans une structure composite ou servant à empêcher la formation de masses de résine dans un processus de moulage par transfert de résine à des fins de fabrication d'une structure composite.

8. Structure composite, telle une pale d'éolienne, réalisée à partir d'une matière de renfort de fibres encastrée dans une matrice polymère et comportant une corde (60, 160, 260, 360) selon les revendications 1 à 6, la corde (60, 160, 260, 360) étant encastrée dans la matrice polymère, par exemple avec la corde (60, 160, 260, 360) qui est agencée au niveau d'un ou dans un joint de la structure composite.

9. Procédé de fabrication d'une corde (60, 160, 260, 360) comportant des fibres de renfort coupées (162, 262), le procédé comportant les étapes consistant à :
a) mettre en oeuvre des fibres de renfort coupées (162, 262), sous la forme de fibres de verre, qui ont essentiellement une orientation aléatoire, et qui ont une longueur moyenne entre 0,5 cm et 5 cm,
b) mettre en oeuvre un moyen de retenue servant à retenir les fibres de renfort coupées (162, 262), et
c) façonner les fibres de renfort coupées (162, 262) et le moyen de retenue en une corde (60, 160, 260, 360), les fibres de verre ayant essentiellement une orientation aléatoire,
**caractérisé en ce que**
dans lequel l'étape a) comporte l'étape consistant à couper une matière de renfort de fibres en des fibres de renfort coupées (162, 262).

10. Procédé selon la revendication 9, dans lequel les étapes b) et/ou c) comportent l'étape consistant à acheminer la matière de renfort coupée (162, 262) jusque dans un tube à mailles.

11. Système comportant une matière de renfort de fibres de verre et un appareil (70) servant à fabriquer une corde (60, 160, 260, 360) comportant des fibres de renfort coupées (162, 262), dans lequel l'appareil comporte :
- un dispositif de coupe (75) servant à couper la matière de renfort de fibres de verre en des fibres de renfort coupées (162, 262), qui ont une longueur moyenne entre 0,5 cm et 5 cm,
- un dispositif de formation de corde (90) servant à mettre en oeuvre un moyen de retenue servant à retenir les fibres de renfort coupées (162, 262) et à façonner les fibres de renfort coupées (162, 262) en une forme de corde, et
- un dispositif de remplissage (80, 180, 280) servant à acheminer les fibres de renfort coupées (162, 262) jusqu'au dispositif de formation de corde (90), dans lequel le dispositif de remplissage (80, 180, 280) est adapté pour recevoir lesdites fibres de renfort coupées (162, 262) en provenance du dispositif de coupe (75), et le dispositif de remplissage (80, 180, 280) étant par ailleurs raccordé à la machine de formation de corde de manière à acheminer lesdites fibres de renfort coupées (162, 262) jusqu'à ladite machine de formation de corde, et dans lequel l'appareil comporte par ailleurs un moyen servant à orienter de manière aléatoire les fibres de renfort coupées.

12. Système selon la revendication 11, dans lequel le dispositif de formation de corde comporte un dispositif de tressage servant à tresser un ou plusieurs fils d'enroulement autour des fibres de renfort coupées.

13. Système selon l'une quelconque des revendications 11 à 12, dans lequel le dispositif d'acheminement comporte un compacteur à vis servant à compacter les fibres de renfort coupées.

14. Système selon l'une quelconque des revendications 11 à 13, dans lequel le dispositif de remplissage comporte par ailleurs une buse à orientation variable, par exemple rotative, servant à rendre aléatoire l'orientation des fibres de renfort coupées acheminées jusque dans le dispositif de façonnage de corde.
